# EUROPÄISCHE PATENTSCHRIFT

(11) **EP 0 939 720 B1**
(45) Veröffentlichungstag und Bekanntmachung des Hinweises auf die Patenterteilung: **14.02.2001**
(21) Anmeldenummer: 97951188.8
(22) Anmeldetag: 13.11.1997
(51) Int. Cl.: B62D 5/22

(54) **ZAHNSTANGEN-HILFSKRAFTLENKUNG**
RACK-AND-PINION ASSISTED STEERING SYSTEM
DIRECTION ASSISTEE A CREMAILLERE

(30) Priorität: 19.11.1996 DE 19647797
(43) Veröffentlichungstag der Anmeldung: 08.09.1999
(73) Patentinhaber: ZF FRIEDRICHSHAFEN Aktiengesellschaft, 88038 Friedrichshafen (DE)
(72) Erfinder: HAFERMALZ, Jens-Uwe, D-73525 Schwäbisch Gmünd (DE)
(74) Vertreter: Wiechmann, Manfred
(86) Internationale Anmeldenummer: EP9706334
(87) Internationale Veröffentlichungsnummer: WO9822326

(56) Entgegenhaltungen:
- EP-A- 0 462 855
- DE-A- 1 605 911
- FR-A- 2 165 522
- GB-A- 1 144 052

## Beschreibung

Die Erfindung betrifft eine Zahnstangen-Hilfskraftlenkung, mit einem mehrteiligen Lenkgehäuse, das ein Ritzelgehäuse und ein Zylindergehäuse mit einem zwischen den beiden Gehäuseteilen angeordneten, z. B. aus Kunststoff gefertigten, stark elastischen Verbindungsgehäuse aufweist. In dem Ritzelgehäuse dreht sich ein Ritzel. Eine in dem mehrteiligen Lenkgehäuse axial verschiebbar geführte Zahnstange wird in dem Ritzelgehäuse durch ein federbelastetes Druckstück mit dem Ritzel in Eingriff gehalten. Die Zahnstange ist über eine Kolbenstange mit einem Kolben verbunden, der in dem Zylindergehäuse zwei Druckräume eines Servomotors voneinander trennt. Das Verbindungsgehäuse ist so ausgeführt, daß keine lagebestimmenden Kräfte vom Ritzelgehäuse auf das Zylindergehäuse übertragen werden.

Die Erfindung geht von der nicht vorveröffentlichten WO-A-9720724 aus, die eine Zahnstangen-Hilfskraftlenkung der eingangs genannten Art beschreibt, bei der eine Überbestimmung der Lagerung der Zahnstange in dem Lenkgehäuse ohne aufwendige Einengung der Toleranzen bei der Fertigung des Lenkgehäuses und der Zahnstange vermieden wird. Man vereinfacht die Fertigung dadurch, daß das Verbindungsgehäuse zwischen dem Ritzelgehäuse und dem Zylindergehäuse aus einem elastischen Material besteht. Durch das elastische Verbindungsgehäuse, das selbst keine Kräfte und Momente überträgt, läßt sich eine Überbestimmung der Lagerung der Zahnstange in dem Lenkgehäuse vermeiden. Die Lage des Ritzelgehäuses zu dem Zylindergehäuse wird durch die Zahnstange festgelegt.

Bei Zahnstangen-Hilfskraftlenkungen mit einer relativ starren Verbindung zwischen Ritzelgehäuse und Zylindergehäuse verschlechtern Fertigungsfehler zwischen der Ritzelachse und der Zahnstangenachse das Abrollverhalten. Einerseits bestimmen die Verzahnung von Ritzel und Zahnstange die Achsen und andererseits bestimmen die Lagerstellen von Zahnstange und Ritzel zwei weitere Achsen. Damit diese Achsen übereinstimmen, müssen die in Frage kommenden Bauteile sehr genau bearbeitet werden. Die Maßtoleranzen und die Form- und Lagetoleranzen sind entsprechend klein, woraus erhebliche Fertigungskosten entstehen. Bei dem Konzept nach der DE 195 45 439 sind die Lagerstellen von Zahnstange und Ritzel nicht starr in einem Gehäuse festgelegt. Die Ausrichtung der Ritzelachse A erfolgt über die vorhandene Berührungslinie B der Verzahnung. Die Zahnstangenverzahnung wird durch das Druckstück in die Ritzelverzahnung gedrückt, wodurch sich die Ritzelachse ausrichtet. Durch das vorhandene Druckstückspiel kann sich die Ritzelachse gegenüber der Zahnstangenverzahnung jedoch noch geringfügig verschieben. Dies führt wiederum zu einem schlechten Abrollverhalten der Verzahnung.

Der Erfindung liegt die Aufgabe zugrunde, bei Zahnstangen-Hilfskraftlenkungen mit einem elastischen Verbindungsgehäuse die durch das Druckstückspiel noch vorhandene Fehlerquelle zu vermeiden, so daß sich ein optimales Abrollverhalten der Verzahnung ergibt.

Diese Aufgabe wird durch die im Anspruch 1 gekennzeichnete Zahnstangen-Hilfskraftlenkung gelöst. Die Lösung erfolgt dadurch, daß auf das federbelastete Druckstück ein zusätzliches Druckglied einwirkt, welches in dem noch nicht in das Fahrzeug eingebauten Zustand der Zahnstangenlenkung die Zahnstange spielfrei in das Ritzel drückt und nach der Montage der Lenkung im Fahrzeug wieder entfernt wird. Dadurch läßt sich die Ritzelachse mit dem Ritzelgehäuse nach der vorhandenen Verzahnung ausrichten. Das Druckglied beseitigt somit das Druckstückspiel, indem es das Druckstück gegen die Zahnstange und diese gegen das Ritzel drückt. Die Wirkung des Druckstückes ist aufgehoben. Auf diese Weise sichert man die Ausrichtung der Ritzelachse nach der Berührungslinie der Zahnstangenverzahnung mit der Ritzelverzahnung ohne Spiel zwischen diesen Bauteilen.

Eine zweckmäßige Ausführung ist im Anspruch 2 angegeben. Das Druckglied stützt sich in einem Deckel des Druckstückes ab und ist als Schraube ausgebildet. Auf diese Weise erhält man eine kostengünstige Lösung für ein zusätzliches, auf die Zahnstange 1 wirkendes Druckglied.

Nach Anspruch 3 sichert das Druckglied die Zahnstange in der Mittenstellung, so daß sich das Fahrzeug in Geradeausfahrstellung befindet. Diese Stellung wird von den Fahrzeugherstellern für die Montage der Lenkung bevorzugt.

Im folgenden wird die Erfindung anhand eines in der Zeichnung dargestellten Ausführungsbeispieles näher erläutert.
Es zeigen:
- Fig. 1: eine Draufsicht auf das Lenkgetriebe mit teilweise weggebrochenem Gehäuse und
- Fig. 2: eine andere Draufsicht auf das Lenkgetriebe mit teilweise weggebrochenem Gehäuse mit Druckstück und Druckglied.

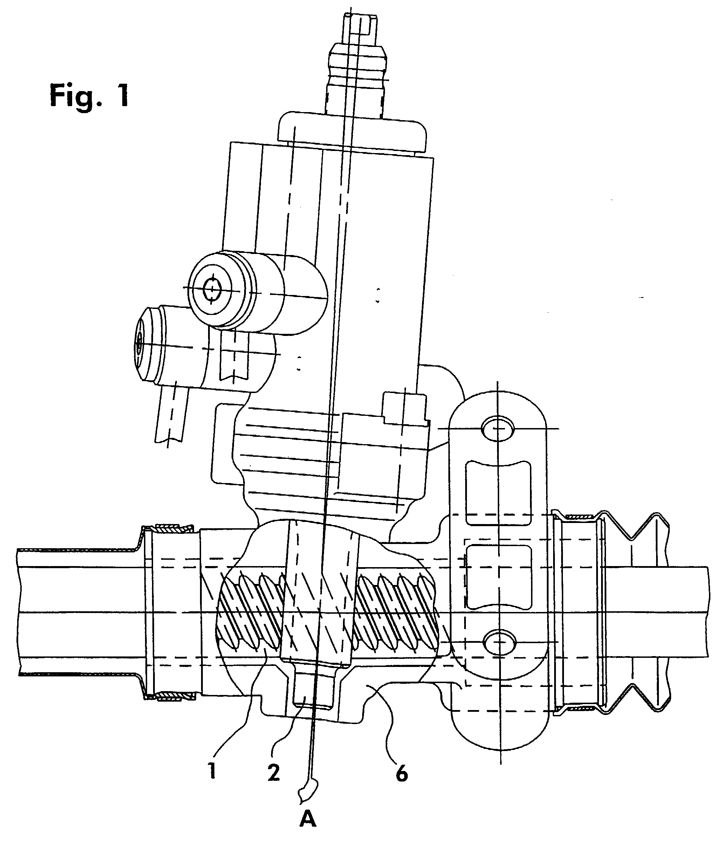

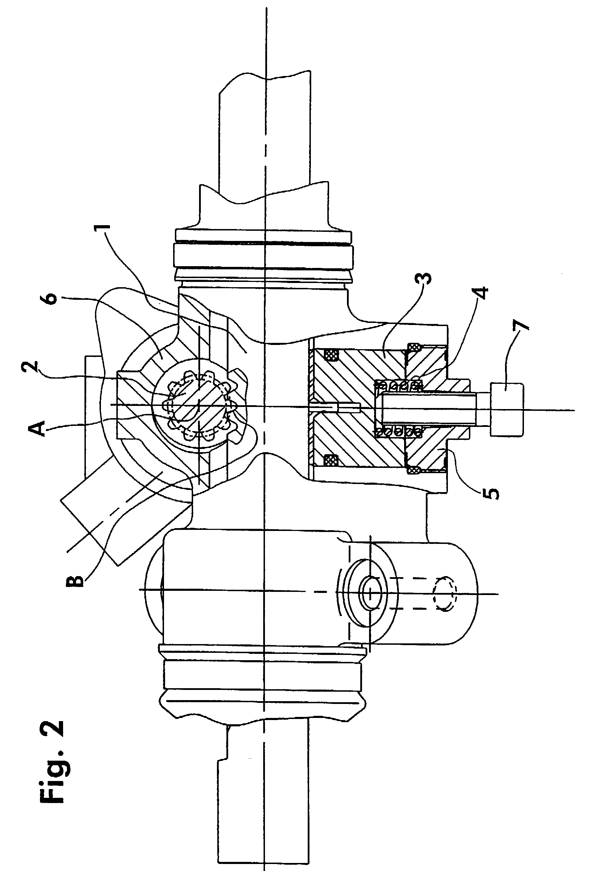

Wie die Fig. 1 und 2 zeigen, greift eine Zahnstange 1 in ein Ritzel 2 ein. Die Ausrichtung der Ritzelachse A erfolgt über die vorhandene Berührungslinie B (Fig. 2). Ein Druckstück 3 drückt die Zahnstangenverzahnung durch die Kraft einer Feder 4 in die Ritzelverzahnung und richtet die Ritzelachse A aus. Die Feder 4 stützt sich in einem Dekkel 5 in einem Ritzelgehäuse 6 ab. Die Ritzelachse kann sich jedoch gegenüber der Zahnstangenverzahnung innerhalb des vorhandenen Druckstückspiels noch um einen geringen Betrag verschieben. Nach der Erfindung sitzt in dem Deckel 5 ein Druckglied 7, welches das Druckstück 3 gegen die Zahnstange 1 und diese gegen das Ritzel 2 schiebt. Diese Schraube 7 legt im Gegensatz zum Druckstück 3 eine spielfreie Abstützung der Zahnstange 1 im Ritzel 2 fest. In diesem Zustand wird anschließend das Ritzelgehäuse 6 im Fahrzeug montiert und danach das Druckglied 7 wieder entfernt. Das zuvor eingestellte Druckstückspiel ist jetzt wieder vorhanden. Als Druckglied 7 ist z. B. eine Schraube verwendbar.

Durch die Erfindung läßt sich ein ähnlicher Vorteil erzielen, wie bei einer Auswahlmontage. Bei einer Auswahlmontage werden die Gehäuselagerstellen exakt vermessen und in der Folge mit ausgewählten Verzahnungen an Ritzel und Zahnstange gepaart. Eine solche Auswahl ist jedoch aufgrund der Kosten und der hohen Stückzahl nicht durchführbar. Bei der Anwendung eines elastischen Verbindungsgehäuses in Verbindung mit dem erfindungsgemäßen Druckglied 7 entsteht selbsttätig eine optimale Paarung der Bauteile durch das Ausrichten der Ritzelachse A nach der Verzahnung der Zahnstange 1.

Weitere Vorteile entstehen dadurch, daß Fertigungsfehler bei der Herstellung der Ritzel- und Zahnstangenverzahnung größer sein können, ohne daß sich das Abrollverhalten verschlechtert. Durch die größeren Fertigungstoleranzen sinkt der Ausschuß und es können Fertigungsprozesse mit größerer Bearbeitungsgeschwindigkeit angewendet werden. Dies führt zu einer Kostenverringerung bei besserer bzw. gleicher Abrollqualität der Verzahnung.

Es ist vorgesehen, daß das Druckglied die Zahnstange im Anlieferzustand in der Mittenstellung mit dem Druckstück im Ritzel fixiert, d. h., das Fahrzeug fährt in dieser Lage geradeaus. Dieser Anlieferzustand wird von vielen Fahrzeugherstellern bevorzugt, da sich dadurch die Montage im Fahrzeug vereinfachen läßt.

### Bezugszeichen

- 1: Zahnstange
- 2: Ritzel
- 3: Druckstück
- 4: Feder
- 5: Deckel
- 6: Ritzelgehäuse
- 7: Schraube

- A: Ritzelachse
- B: Berührungslinie Verzahnung

## Patentansprüche

1. Zahnstangen-Hilfskraftlenkung, insbesondere für Kraftfahrzeuge, mit folgenden Merkmalen:
- ein mehrteiliges Lenkgehäuse weist ein Ritzelgehäuse (6) und ein Zylindergehäuse mit einem zwischen den beiden Gehäuseteilen angeordneten, stark elastischen Verbindungsgehäuse auf;
- in dem Ritzelgehäuse ist ein Ritzel (2) drehbar gelagert;
- eine in dem Lenkgehäuse axial verschiebbar geführte Zahnstange (1) wird in dem Ritzelgehäuse (6) durch ein federbelastetes Druckstück (3) mit dem Ritzel (2) in Eingriff gehalten;
- die Zahnstange ist über eine Kolbenstange mit einem Kolben verbunden, der in dem Zylindergehäuse zwei Druckräume eines Servomotors voneinander trennt,
wobei auf das federbelastete Druckstück (3) ein zusätzliches Druckglied (7) einwirkt, welches im noch nicht in das Fahrzeug eingebauten Zustand der Zahnstangen-Hilfskraftlenkung die Zahnstange (1) spielfrei in das Ritzel (2) drückt und nach der Montage der Lenkung im Fahrzeug entfernt wird.

2. Zahnstangen-Hilfskraftlenkung nach Anspruch 1, dadurch **gekennzeichnet** , daß das Druckglied (7) als eine in einem Deckel (5) des Druckstückes (3) sitzende Schraube ausgebildet ist.

3. Zahnstangen-Hilfskraftlenkung nach Anspruch 1, dadurch **gekennzeichnet**, daß das Druckglied die Zahnstange (1) im Lenkungsanlieferzustand in der Mittenstellung fixiert.

## Claims

1. Power-assisted rack-and-pinion steering system, in particular for motor vehicles, with the following features:
- a multi-part steering housing has a pinion housing (6) and a cylinder housing with a highly elastic connecting housing arranged between the two housing parts;
- a pinion (2) is rotatably mounted in the pinion housing;
- a rack (1) guided axially displaceably in the steering housing is held in engagement with the pinion (2) in the pinion housing (6) by means of a spring-loaded thrust piece (3);
- the rack is connected via a piston rod to a piston which separates two pressure spaces of a servomotor from one another in the cylinder housing,
the spring-loaded thrust piece (3) having acting on it an additional thrust member (7) which, when the power-assisted rack-and-pinion steering system is in the state not yet installed in the vehicle, presses the rack (1) into the pinion (2) in a manner free of play and, after the steering system has been mounted in the vehicle, is removed.

2. Power-assisted rack-and-pinion steering system according to Claim 1, characterized in that the thrust member (7) is in the form of a screw seated in a cover (5) of the thrust piece (3).

3. Power-assisted rack-and-pinion steering system according to Claim 1, characterized in that, when the steering system is in the delivery state, the thrust member fixes the rack (1) in the middle position.

## Revendications

1. Direction assistée à crémaillère, en particulier pour véhicules à moteur, ayant les caractéristiques suivantes :
- un boîtier de direction en plusieurs parties présente un boîtier de pignon (6) et un boîtier de cylindre avec un boîtier de connexion fortement élastique disposé entre les deux parties de boîtier ;
- un pignon (2) est monté rotatif dans le boîtier de pignon ;
- une crémaillère (1) guidée de manière mobile axialement dans le boîtier de direction est maintenue en prise avec le pignon (2) dans le boîtier de pignon (6) par une pièce de compression (3) sollicitée à ressort ;
- la crémaillère est reliée par le biais d'une tige de piston à un piston qui sépare l'un de l'autre dans le boîtier de cylindre deux espaces de compression d'un servomoteur,
un organe de compression supplémentaire (7) agissant sur la pièce de compression (3) sollicitée à ressort, cet organe de compression comprimant sans jeu dans le pignon (2) la crémaillère (1) dans l'état encore non incorporé au véhicule de la direction assistée à crémaillère et étant enlevé après le montage de la direction dans le véhicule.

2. Direction assistée à crémaillère selon la revendication 1, caractérisée en ce que l'organe de compression (7) est conçu en tant que vis reposant dans un couvercle (5) de la pièce de compression (3).

3. Direction assistée à crémaillère selon la revendication 1, caractérisée en ce que, dans l'état d'alimentation de la direction, l'organe de compression fixe la crémaillère (1) en position centrale.
